# EUROPEAN PATENT APPLICATION

(11) **EP 3 892 427 A1**
(43) Date of publication of application: **13.10.2021**
(21) Application number: 20755048.4
(22) Date of filing: 07.02.2020
(51) Int. Cl.: B25J 9/22, B25J 13/00, B25J 13/06, B25J 13/08, G05B 19/409

(54) **CONTROL DEVICE AND PROGRAM**

(30) Priority: 13.02.2019 JP 2019023417
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: WATANABE, Yuka, Kawasaki-shi, Kanagawa 212-0013 (JP); SEKIYA, Kenichi, Kawasaki-shi, Kanagawa 212-0013 (JP); SATO, Masataka, Kawasaki-shi, Kanagawa 212-0013 (JP)
(74) Representative: Horn Kleimann Waitzhofer Patentanwälte PartG mbB
(86) International application number: PCT/JP2020/004835
(87) International publication number: WO 2020/166509

(57) **Abstract**

A control device comprises a first interface, a second interface, a processor, and a third interface. A first interface is configured to acquire a captured image of an article. A second interface is configured to transmit and receive data to and from an input/output device. A processor is configured to cause the input/output device to display an article image based on the captured image, receive an input of a position and an angle of a grip portion model of a grip portion that grips the article from the input/output device through the second interface, display the grip portion model on the article image, and generate a gripping plan. A third interface configured to transmit the gripping plan to a control unit of a gripping device including the grip portion.

## Description

### FIELD

Embodiments described herein relate generally to a control device and a program.

### BACKGROUND

As a control device for controlling a picking robot that picks up an article, there is a control device that receives an input of a position of an article from an operator. Such a control device formulates a gripping plan indicating a gripping position, a gripping angle, and the like at which a picking robot for performing pickup grips an article based on an input position of the article or the like.

Conventionally, there is a case where the control device cannot obtain an appropriate gripping position and gripping angle.

### SUMMARY

In order to solve the above problem, a control device and a program capable of appropriately generating a gripping plan are provided.

A control device comprises a first interface, a second interface, a processor, and a third interface. A first interface is configured to acquire a captured image of an article. A second interface is configured to transmit and receive data to and from an input/output device. A processor is configured to cause the input/output device to display an article image based on the captured image, receive an input of a position and an angle of a grip portion model of a grip portion that grips the article from the input/output device through the second interface, display the grip portion model on the article image, and generate a gripping plan. A third interface configured to transmit the gripping plan to a control unit of a gripping device including the grip portion.

### BRIEF DESCRIPTION OF THE DRAWINGS

FIG. 1 is a diagram schematically showing a configuration example of a picking system according to an embodiment.
FIG. 2 is a block diagram showing a configuration example of a control device according to the embodiment.
FIG. 3 is a diagram showing a display example of the control device according to the embodiment.
FIG. 4 is a diagram showing a display example of the control device according to the embodiment.
FIG. 5 is a diagram showing an operation example of the control device according to the embodiment.
FIG. 6 is a diagram showing an operation example of the control device according to the embodiment.
FIG. 7 is a diagram showing an example of a gripping plan according to the embodiment.
FIG. 8 is a flowchart showing an operation example of the control device according to the embodiment.
FIG. 9 is a flowchart showing an operation example of the control device according to the embodiment.
FIG. 10 is a flowchart showing an operation example of the control device according to the embodiment.

### DETAILED DESCRIPTION

Hereinafter, embodiments will be described with reference to the drawings.

A picking system according to an embodiment picks up a predetermined article. The picking system picks up an article using a robot arm having a grip portion formed at a distal end thereof. The picking system picks up an article from an article group formed by stacking a plurality of articles.

The picking system stacks the picked up articles in a predetermined region (stacking region) such as a warehouse or a container.

The picking system is used in a distribution center, a warehouse, or the like. The articles picked up by the picking system and the application of the picking system are not limited to any particular configuration.

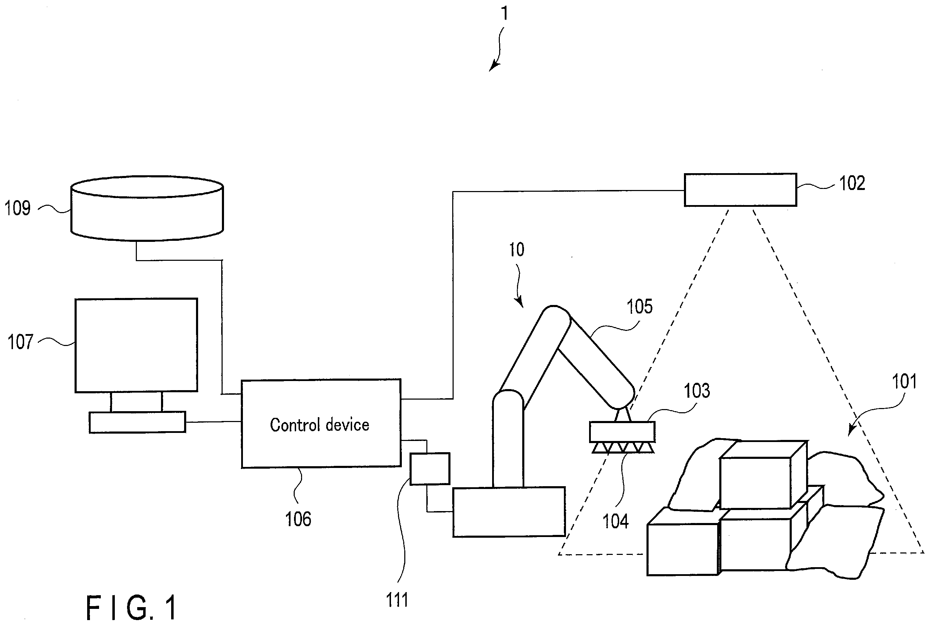

FIG. 1 schematically shows a configuration example of a picking system 1 according to an embodiment. In the example shown in FIG. 1, the picking system 1 picks up an article from an article group 101. As shown in FIG. 1, the picking system 1 includes a picking robot 10, an image sensor 102, a control device 106, an input/output device 107, a storage device 109, a robot controller 111, and the like.

The picking system 1 may include a configuration as necessary in addition to the configuration shown in FIG. 1, or may have a specific configuration excluded therefrom.

The article group 101 includes a plurality of articles. The article group 101 is formed in a state where a plurality of articles overlap each other. The article group 101 is arranged in a predetermined region. For example, the article group 101 is arranged in a predetermined case. The article group 101 may be arranged in a predetermined warehouse or the like.

The articles configuring the article group 101 may be rectangular boxes or the like. The articles configuring the article group 101 may be formed in a bag shape. For example, the article configuring the article group 101 is a commodity, a component, a package, or the like. The shapes and applications of the articles configuring the article group 101 are not limited to a specific configuration.

The control device 106 is connected to the image sensor 102, the input/output device 107, the storage device 109, the robot controller 111, and the like. The control device 106 formulates a gripping plan based on an operation or the like input from the input/output device 107 or the like. The gripping plan includes a position (gripping position) at which a grip portion 103 described later grips a predetermined package configuring the article group 101, an angle (gripping angle) at which the grip portion 103 grips the predetermined package, and the like.

The control device 106 formulates a gripping plan for each article to be gripped. The control device 106 transmits the gripping plan to the robot controller 111.

The control device 106 will be described later in detail.

The image sensor 102 is disposed above a region where the article group 101 is disposed. The image sensor 102 captures an image of the article group 101 and acquires the captured image. The image sensor 102 acquires an RGB color image as a captured image.

In addition, the image sensor 102 measures a distance from each portion of the article group 101 (or each portion of the region in which the article group 101 is disposed) to the image sensor 102 or a distance from each portion of the article group 101 to a surface horizontal to the image sensor 102.

The image sensor 102 generates distance information indicating a distance from a predetermined reference surface based on the measurement result. For example, the distance information may indicate each coordinate of a point group in a predetermined three dimensional coordinate system.

For example, the image sensor 102 is, for example, a stereo camera. The stereo camera measures the distance between the image sensor 102 and each portion based on parallax when images are captured from two different points.

For example, the image sensor 102 may include a light source and an optical sensor that detects reflected light of light emitted from the light source. The image sensor 102 measures the distance based on reflected light of light (visible light or non-visible light) emitted from the light source. For example, the image sensor 102 may perform a time-of-flight (ToF) method in which the distance to a measurement target is measured based on the time taken for the emitted light to reach the optical sensor after being reflected by the measurement target.

The image sensor 102 may include a plurality of sensors.

Various instructions are input to the input/output device 107 by an operator. The input/output device 107 transmits a signal indicating an instruction input by the operator to the control device 106. The input/output device 107 includes, for example, a keyboard, a ten key pad, a mouse, and a touch panel as an operation unit.

The input/output device 107 displays various information to the operator. That is, the input/output device 107 displays a screen showing various information based on a signal from the control device 106. The input/output device 107 includes, for example, a liquid crystal display as a display unit.

The storage device 109 stores predetermined data under the control of the control device 106. For example, the storage device 109 stores the gripping plan generated by the control device 106. In addition, the storage device 109 stores information indicating whether or not the picking robot 10 has succeeded in performing pickup according to the gripping plan in association with the gripping plan.

For example, the storage device 109 is configured by a nonvolatile memory, etc. in which data can be written and rewritten. The storage device 109 includes, for example, a hard disk drive (HDD), a solid state drive (SSD), or a flash memory.

The picking robot 10 (gripping device) is connected to the robot controller 111. The picking robot 10 picks up a predetermined article from the article group 101 under the control of the robot controller 111. The picking robot 10 stacks the picked up article in a predetermined stacking region.

The picking robot 10 includes a grip portion 103, a suction pad 104, and a robot arm 105, etc.

The robot arm 105 is a manipulator driven under the control of the robot controller 111. The robot arm 105 includes a rod-shaped frame and a motor for driving the frame.

The grip portion 103 is installed at the tip of the robot arm 105. The grip portion 103 moves along with the movement of the robot arm 105. When the robot arm 105 moves in a predetermined direction, the grip portion 103 moves to a position where it grips the article of the article group 101.

The grip portion 103 grips the articles of the article group 101. Here, the grip portion 103 includes the suction pad 104. The suction pad 104 suctions an article. For example, the suction pad 104 suctions an article by vacuum suction. The suction pad 104 exerts internal negative pressure based on the control from the robot controller 111. The suction pad 104 is vacuum-sucked to the surface of the article by exerting internal negative pressure in a state where it is in contact with the surface of the article. The suction pad 104 releases the article when the internal negative pressure is released.

Here, the grip portion 103 includes a plurality of suction pads 104.

It should be noted that various gripping mechanisms other than the suction pads may be adopted as the grip portion 103. For example, the grip portion 103 may include a gripper that grips an article. The gripper includes a plurality of fingers and a plurality of joint mechanisms connecting the plurality of fingers. The joint mechanism may be configured in a manner that the fingers move in conjunction with the movement of the joint mechanism. The gripper, for example, applies forces to a package from a plurality of opposing directions at two or more points of contact with a plurality of fingers. Thus, the grip portion 103 grips the article by friction generated between the finger and the package. The configuration of the grip portion 103 may use various gripping mechanisms capable of gripping the articles of the article group 101, and is not limited to a specific configuration.

The robot controller 111 (control unit) controls the picking robot 10 under the control of the control device 106. For example, the robot controller 111 receives the gripping plan from the control device 106. The robot controller 111 formulates a path plan indicating a path along which the grip portion 103 is moved to the gripping position based on the gripping plan. For example, the robot controller 111 formulates the path plan so that the grip portion 103 and the robot arm 105 do not come into contact with the package or the like of the article group 101.

The robot controller 111 moves the grip portion 103 according to the path plan. That is, the robot controller 111 controls the robot arm 105 to move the grip portion 103 along the path indicated by the path plan.

The robot controller 111 moves the grip portion 103 and controls the suction pad 104 in a manner that the suction pad 104 is suctioned to the article of the article group 101. The robot controller 111 picks up the article by moving the robot arm 105 in a state where the article is suctioned.

The robot controller 111 moves the robot arm 105 to convey the picked up article to a predetermined stacking region. When the article is conveyed to a predetermined stacking region, the robot controller 111 controls the suction pad 104 to release the article.

In addition, the robot controller 111 generates completion information indicating whether or not the article has been gripped successfully. For example, in a case where an article is gripped according to the gripping plan, the robot controller 111 generates completion information indicating that the article has been gripped successfully.

In addition, in a case where the article has failed to be gripped (for example, in a case where the article cannot be gripped, or in a case where the gripped article falls, or the like), the robot controller 111 generates completion information indicating that the article has failed to be gripped.

The robot controller 111 transmits the generated completion information to the control device 106.

For example, the robot controller 111 includes a processor or the like. For example, the robot controller 111 includes a PC, an application specific integrated circuit (ASIC), or the like. The configuration of the robot controller 111 is not limited to a specific configuration.

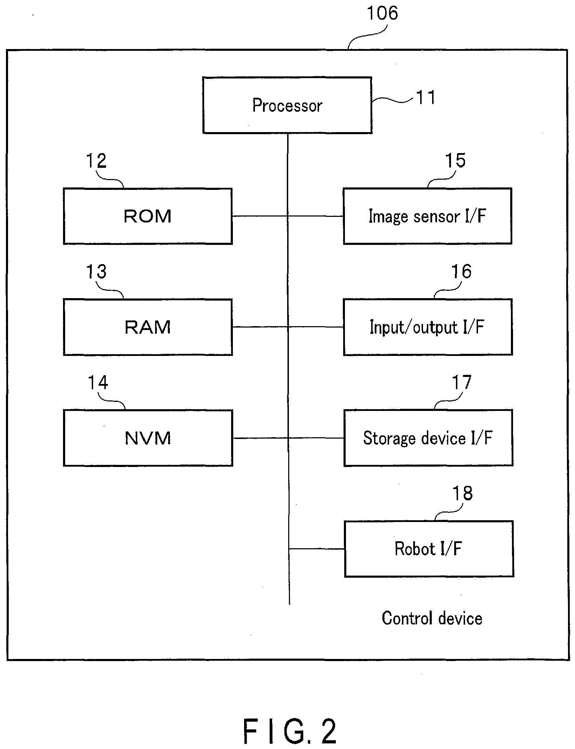

A configuration example of the control device 106 will now be described. FIG. 2 is a block diagram showing a configuration example of the control device 106. As shown in FIG. 2, the control device 106 includes a processor 11, a ROM 12, a RAM 13, an NVM 14, an image sensor interface 15, an input/output interface 16, a storage device interface 17, and a robot interface 18, etc.

The processor 11 is connected to the ROM 12, the RAM 13, the NVM 14, the image sensor interface 15, the input/output interface 16, the storage device interface 17, and the robot interface 18 via a databus or the like.

Note that the control device 106 may include a configuration as necessary in addition to the configuration shown in FIG. 2, or a specific configuration may be excluded from the control device 106.

The processor 11 has a function of controlling the operation of the entire control device 106. The processor 11 may include an internal cache and various interfaces. The processor 11 realizes various processes by executing programs stored in advance in the internal memory, the ROM 12, or the NVM 14.

Note that some of the various functions realized by the processor 11 executing the program may be realized by a hardware circuit. In this case, the processor 11 controls the functions performed by the hardware circuit.

The ROM 12 is a non-volatile memory in which a control program and control data, etc. are stored in advance. The control program and the control data stored in the ROM 12 are incorporated in advance according to the specifications of the control device 106.

The RAM 13 is a volatile memory. The RAM 13 temporarily stores data, etc. being processed by the processor 11. The RAM 13 stores various application programs based on instructions from the processor 11. The RAM 13 may store data necessary for executing the application program and the result of executing the application program, etc.

The NVM 14 is a data-writable and rewritable nonvolatile memory. The NVM 14 includes, for example, a hard disk drive (HDD), a solid state drive (SDD), or a flash memory. The NVM 14 stores a control program, an application, various kinds of data, and the like in accordance with application of the control device 106.

The image sensor interface 15 (first interface) is an interface for transmitting and receiving data to and from the image sensor 102. For example, the image sensor interface 15 acquires the captured image and the distance information from the image sensor 102 and transmits the captured image and the distance information to the processor 11. The image sensor interface 15 may supply electric power to the image sensor 102.

The input/output interface 16 (second interface) is an interface for transmitting and receiving data to and from the input/output device 107. For example, the input/output interface 16 transmits a signal indicating an operation input to the input/output device 107 to the processor 11. The input/output interface 16 transmits image data to be displayed on the input/output device 107 to the input/output device 107 based on the control of the processor 11. The input/output interface 16 may supply electric power to the input/output device 107.

The storage device interface 17 (fourth interface) is an interface for transmitting and receiving data to and from the storage device 109. For example, the storage device interface 17 transmits data to be stored in the storage device 109 to the storage device 109 based on the control of the processor 11. The storage device interface 17 may supply electric power to the storage device 109.

The robot interface 18 (third interface) is an interface for transmitting and receiving data to and from the robot controller 111. For example, the robot interface 18 transmits the gripping plan to the robot controller 111 under the control of the processor 11.

Functions realized by the control device 106 will now be described. The function realized by the control device 106 is realized by the processor 11 executing a program stored in ROM 12 or NVM 14, etc.

First, the processor 11 has a function of acquiring a captured image and distance information of the article group 101 using the image sensor 102.

Here, it is assumed that the article group 101 is stacked in a predetermined region.

For example, when the processor 11 receives an input of a predetermined operation from an operator through the input/output device 107, the processor 11 transmits a signal requesting a captured image and distance information to the image sensor 102 through the image sensor interface 15.

Upon receiving the signal, the image sensor 102 captures an image of the article group 101 and acquires the captured image. Furthermore, the image sensor 102 measures the distance to each part of the article group 101 and generates distance information. The image sensor 102 transmits the captured image and the distance information to the processor 11 through the image sensor interface 15.

The processor 11 acquires the captured image and the distance information from the image sensor 102 through the image sensor interface 15.

When the processor 11 detects that the article group 101 is stacked in the predetermined region, the processor 11 may transmit a signal requesting the captured image and the distance information to the image sensor 102 through the image sensor interface 15.

The processor 11 also has a function of recognizing each article of the article group 101 based on the captured image and the distance information.

The processor 11 recognizes a surface (for example, an upper surface) of one article. For example, the processor 11 specifies a region (article region) in which the upper surface of the article is captured in a three-dimensional space.

For example, the processor 11 detects an edge from the captured image. The processor 11 extracts a region recognized based on the detected edge from the distance information. The processor 11 specifies the region extracted from the distance information as the article region.

In addition, the processor 11 may extract a planar region as the article region from the distance information. For example, the processor 11 extracts a planar region using a plane detection method or the like based on RANSAC (Random Sample Consensus).

The processor 11 also has a function of receiving an input of a position and an angle of a grip portion model 201 through the input/output device 107.

The processor 11 displays a screen for receiving input of the position and the gripping angle of the grip portion model 201 through the input/output device 107. The processor 11 displays a three dimensional image (3D image) of the article group 101 on the input/output device 107 based on the captured image, the distance information, and the like.

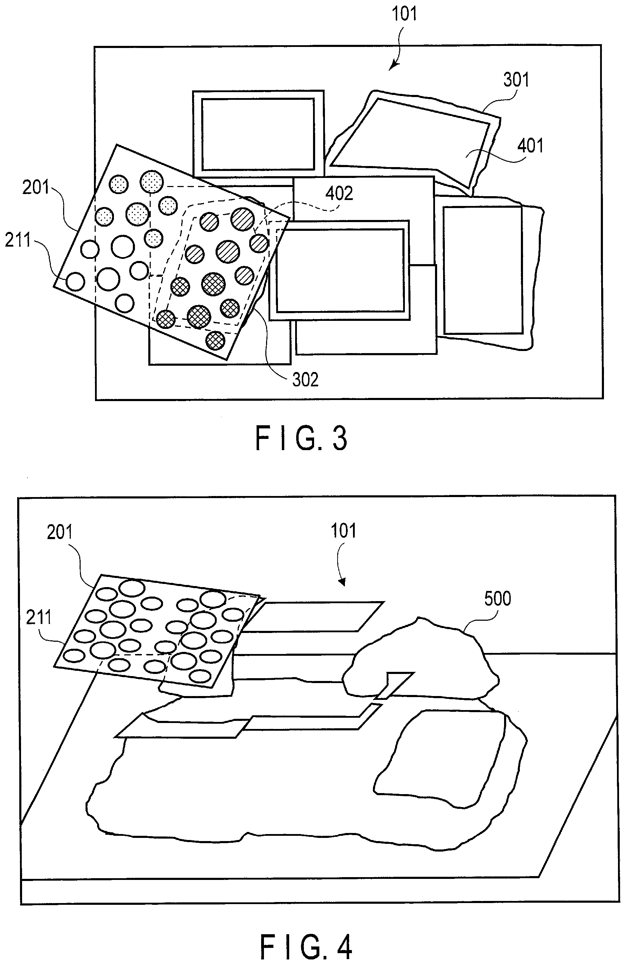

FIG. 3 shows an example of a screen displayed by the processor 11 for receiving the input of the gripping position and the gripping angle. As shown in FIG. 3, the processor 11 displays a 3D image (article image) of the article group 101 viewed from above.

Here, the article group 101 includes an article 301 and an article 302 as articles seen from above.

The processor 11 displays the article region over the article. In an example shown in FIG. 3, the processor 11 displays an article region 401 and an article region 402.

The article region 401 and the article region 402 represent the upper surfaces of the article 301 and the article 302, respectively.

In addition, the processor 11 displays the grip portion model 201 on the 3D image of the article group 101. The grip portion model 201 is a model of the grip portion 103. The grip portion model 201 is formed in the size and shape of the grip portion 103. The grip portion model 201 is formed to be translucent.

The processor 11 displays a suction pad model 211 inside the grip portion model 201. The suction pad model 211 is a model of the suction pad 104. The suction pad model 211 is formed in the size, shape and position of the suction pad 104. Here, the processor 11 displays a plurality of suction pad models 211 respectively corresponding to the plurality of suction pads 104.

The processor 11 displays information indicating the suction pads 104 connected to a common valve among the valves controlling the pressure of the suction pads 104. That is, the processor 11 specifies the suction pad model 211 that corresponds to the suction pad 104 connected to the common valve.

In the example shown in FIG. 3, the processor 11 displays the suction pads 104 connected to the common valve by the pattern inside the circle of the suction pad model 211. The processor 11 displays the suction pad models 211 displayed in the same pattern as the suction pad models 211 of the suction pads 104 connected to the common valve. For example, the processor 11 displays the suction pad models 211 of the suction pads 104 connected to the common valve by a pattern of oblique lines, grids, or dots, etc.

The processor 11 may surround the suction pad models 211 of the suction pads 104 connected to the common valve with a line. The method by which the processor 11 displays the suction pads 104 connected to the common valve is not limited to a specific method.

The processor 11 also displays the distance between the article region (that is, the article) and the suction pad model 211. In the example shown in FIG. 3, the processor 11 displays the distance between the article region 402 and the suction pad model 211. For example, as the distance between each suction pad model 211 and the article region 402, the processor 11 obtains the shortest distance between the coordinates of the tip of the suction pad 104 calculated based on the position, angle, and shape of the grip portion model 201 and the article region 402. The method by which the processor 11 calculates the distance between the article region 402 and the suction pad model 211 is not limited to a specific method.

Here, the processor 11 displays the distance in the color of the grip portion model 201. For example, in the case where the distance is longer than a predetermined threshold value, the processor 11 does not apply color to the grip portion model 201 (the grip portion model 201 is transparent).

In the case where the distance is within an appropriate range for the grip portion 103 to grip an article, the processor 11 sets the color of the grip portion model 201 to a predetermined color (for example, blue).

In the case where the distance corresponds to a value indicating that the grip portion 103 is too close to the article, the processor 11 sets the color of the grip portion model 201 to another predetermined color (for example, red).

The processor 11 may display the distance by a numerical value.

The processor 11 also receives an input of an operation for changing the position and the angle of the viewpoint of displaying the article group 101 from the input/output device 107.

For example, the processor 11 receives an input such as a drag operation through the input/output device 107. The processor 11 moves the position of the viewpoint in accordance with the input drag operation.

The processor 11 also receives an input of scrolling the screen through the input/output device 107. The processor 11 rotates the viewpoint using the quaternion or the like calculated from the rotation axis and the rotation angle according to the input scroll.

That is, the processor 11 displays a 3D image of the article group 101 viewed from a different viewpoint based on the distance information or the like.

The processor 11 updates the display of the article group 101 in accordance with the input operation.

FIG. 4 shows a display example in the case where the processor 11 rotates the viewpoint. As shown in FIG. 4, the processor 11 displays the article group 101 from a viewpoint of a predetermined angle. As shown in FIG. 4, the processor 11 displays the 3D image viewed from the viewpoint based on the distance information.

The processor 11 also displays the grip portion model 201 and the suction pad model 211 in a state viewed from the viewpoint.

The processor 11 receives an input of the position and the angle of the grip portion model 201 from the operator using the grip portion model 201 displayed on the screen through the input/output device 107. For example, the processor 11 receives an input of coordinates (for example, center coordinates) of the grip portion model 201 at the position of a cursor on the screen. In addition, the processor 11 may receive an input of the coordinates of the grip portion model 201 by a drag operation of the grip portion model 201. In addition, the processor 11 may receive an input of the coordinates of the grip portion model 201 by a key input, a scroll bar, or the like.

Furthermore, the processor 11 receives an input of an angle of the grip portion model 201 by a drag operation. In addition, the processor 11 may receive an input of the coordinates of the grip portion model 201 by a key input, a scroll bar, or the like.

When the processor 11 receives a predetermined operation through the input/output device 107, the processor 11 determines the position and angle of the grip portion model 201.

The method by which the processor 11 receives the input of the position and the angle of the grip portion model 201 is not limited to a specific method.

In addition, the processor 11 has a function of generating a gripping plan based on the input position and angle of the grip portion model 201.

The processor 11 corrects the position and the angle so that the grip portion 103 can easily suction the article, and generates a gripping plan indicating the corrected position and angle as the gripping position and the gripping angle.

For example, the processor 11 corrects the input position and angle of the grip portion model 201 so that the distance between each suction pad model 211 and the article region (for example, the article region covered by the grip portion model 201) becomes an appropriate distance (for example, an optimal distance for gripping). That is, the processor 11 corrects the position and angle of the grip portion model 201 so that the distance between each suction pad model 211 and the article region (or article) becomes a predetermined distance. For example, the processor 11 corrects the position and the angle of the grip portion model 201 using an iterative closest point (ICP) method or a steepest descent method.

It should be noted that the processor 11 may also correct the input position and angle of the grip portion model 201 in a manner that the distance between each suction pad model 211 and the point group of the article (point group within a predetermined distance from the grip portion model 201) in the distance information becomes a predetermined distance.

In addition, the processor 11 may correct the input position and angle of the grip portion model 201 in a manner that the distance between the grip portion model 201 and the article region (or article) becomes an appropriate distance.

The processor 11 generates a gripping plan indicating the corrected position and angle as the gripping position and the gripping angle.

It should be noted that the method by which the processor 11 generates the gripping plan from the position and angle of the grip portion model 201 is not limited to a specific method.

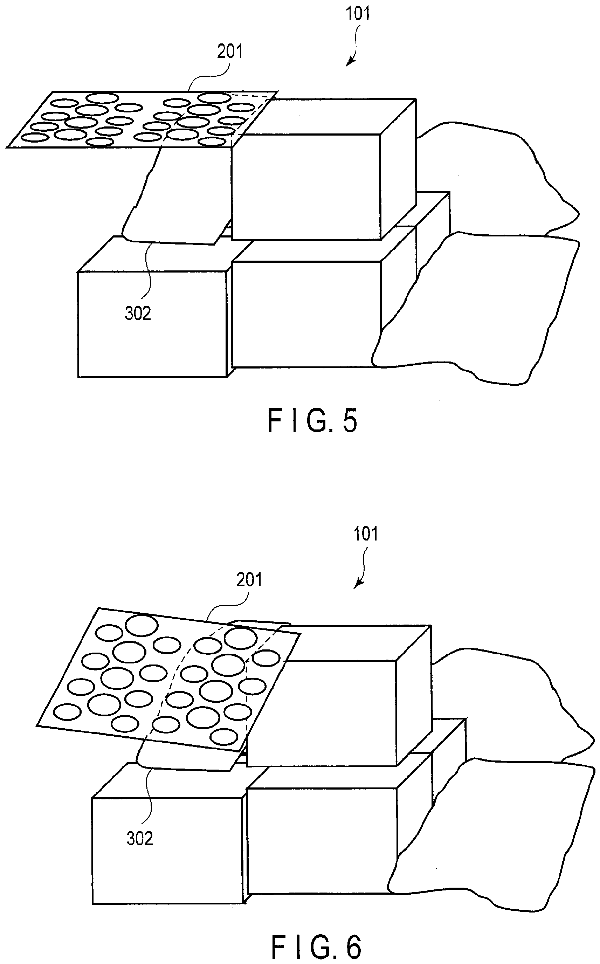

FIG. 5 shows the position and angle of the grip portion model 201 before correction. FIG. 6 shows the position and angle of the grip portion model 201 after correction.

Here, it is assumed that the operator inputs the position and angle of the grip portion model 201 in order to grip the article 302.

As shown in FIG. 5, the grip portion model 201 is formed at a position covering the article 302. In the example shown in FIG. 5, the distance between each suction pad model 211 of the grip portion model 201 and the article region 401 (or the point group of the article 302) is not appropriate.

As shown in FIG. 6, the grip portion model 201 is formed along the article 302. The grip portion model 201 is formed parallel to the upper surface of the article 302. In the example shown in FIG. 6, the distance between each suction pad model 211 of the grip portion model 201 and the article region 401 (or the point group of the article 302) is appropriate.

The processor 11 also displays the gripping plan on the input/output device 107. When receiving an input of a predetermined operation through the input/output device 107, the processor 11 determines a gripping plan.

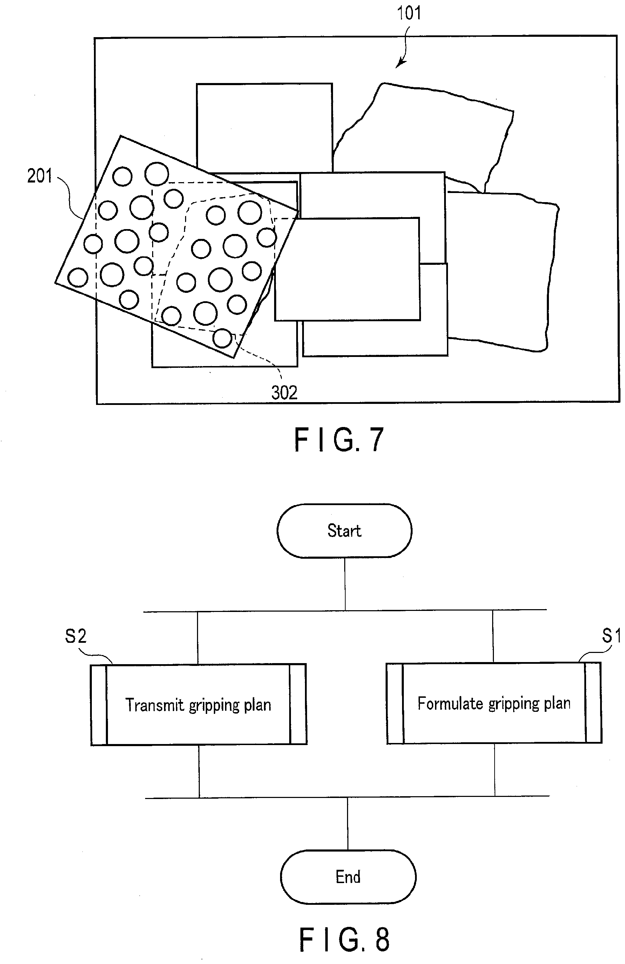

FIG. 7 shows an example of a screen on which the processor 11 displays the gripping plan. Here, the processor 11 displays the gripping plan of the article 302. As shown in FIG. 7, the processor 11 displays the grip portion model 201 at the gripping position and the gripping angle indicated by the gripping plan.

The processor 11 also has a function of transmitting the gripping plan to the robot controller 111 through the robot interface 18.

After generating the gripping plan, the processor 11 transmits the gripping plan to the robot controller 111 through the robot interface 18.

When there are a plurality of gripping plans that are not transmitted to the robot controller 111, the processor 11 selects one gripping plan from the plurality of gripping plans.

For example, the processor 11 selects a gripping plan for an article at the top from the plurality of gripping plans.

In addition, the processor 11 may formulate a path plan of each gripping plan. The processor 11 selects a gripping plan of a path plan in which the path does not come into contact with another article or the like.

The method by which the processor 11 selects the gripping plan is not limited to a specific method.

The processor 11 transmits the selected gripping plan to the robot controller 111 through the robot interface 18.

The robot controller 111 grips the cargo by controlling the picking robot 10 according to the gripping plan.

The processor 11 also has a function of storing completion information indicating whether or not the picking robot 10 has succeeded in gripping a package and a gripping plan in the storage device 109 in association with each other.

When the processor 11 transmits the gripping plan to the robot controller 111, the processor 11 receives completion information from the robot controller 111. The processor 11 stores the transmitted gripping plan and the received completion information in the storage device 109 in association with each other through the storage device interface 17.

An operation example of the control device 106 will now be described. FIG. 8 is a flowchart for explaining the operation example of the control device 106.

The processor 11 of the control device 106 formulates a gripping plan (S1). The processor 11 transmits the gripping plan (S2) simultaneously with the formulation thereof.

When the formulation and the transmission of the gripping plan are ended, the processor 11 ends the operation.

An operation example of the formulation of the gripping plan (S1) will now be described.

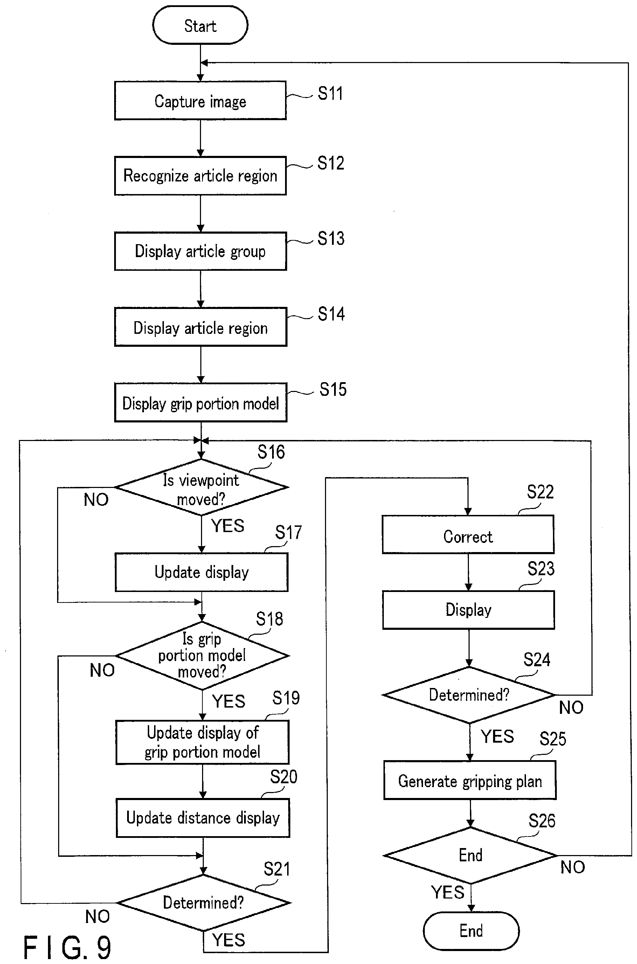

FIG. 9 is a flowchart for explaining the operation example of the formulation of the gripping plan (S1).

First, the processor 11 acquires a captured image and distance information from the image sensor 102 through the image sensor interface 15 (S11). When the captured image and the distance information are acquired, the processor 11 recognizes the article region based on the captured image and the distance information (S12).

When the article region is recognized, the processor 11 displays a 3D image of the article group 101 on the input/output device 107 (S13). When the 3D image of the article group 101 is displayed, the processor 11 displays the article region in a manner overlapping the 3D image of the article group 101 (S14).

When the article region is displayed, the processor 11 displays the grip portion model 201 in a manner overlapping the 3D image of the article group 101 (S15). When the grip portion model 201 is displayed, the processor 11 determines whether an input of an operation of moving the viewpoint is received from the input/output device 107 (S16).

When it is determined that the input of the operation of moving the viewpoint is received (S16, YES), the processor 11 updates the display of the 3D image of the article group 101 according to the input operation (S17).

In the case where it is determined that the input of the operation of moving the viewpoint is not received (S16, NO), or in the case where the display of the 3D image of the article group 101 is updated (S17), the processor 11 determines whether the input of the position or the angle of the grip portion model 201 is received from the input/output device 107 (S18).

When it is determined that the input of the position or the angle of the grip portion model 201 is received (S18, YES), the processor 11 updates the display of the grip portion model 201 (S19). When the display of the grip portion model 201 is updated, the processor 11 updates the display of the distances between the grip portion model 201 and the article regions (S20).

In the case where it is determined that the input of the position or the angle of the grip portion model 201 is not received (S18, NO), or in the case where the display of the distances is updated (S20), the processor 11 determines whether an operation of determining the input of the position or the angle of the grip portion model 201 is received (S21).

When it is determined that the operation of determining the input of the position or the angle of the grip portion model 201 is not received (S21, NO), the processor 11 returns to S16.

When it is determined that the operation of determining the input of the position or the angle of the grip portion model 201 is received (S21, YES), the processor 11 corrects the position and the angle of the grip portion model 201 (S22).

When the position and angle of the grip portion model 201 are corrected, the processor 11 displays the grip portion model 201 according to the corrected position and angle (S23). When the grip portion model 201 is displayed, the processor 11 determines whether an input of an operation of determining a gripping plan is received (S24).

When it is determined that the input of the operation of determining the gripping plan is not received (S24, NO), the processor 11 returns to S16.

When it is determined that the input of the operation of determining the gripping plan is received (S24, YES), the processor 11 generates a gripping plan in which the corrected position and angle are indicated as the gripping position and the gripping angle (S25).

After generating the gripping plan, the processor 11 determines whether to end the generation of the gripping plan (S25). For example, the processor 11 determines whether an input of an operation to end the generation of the gripping plan is received. In addition, in a case where a gripping plan of each article of the article group 101 is formulated, the processor 11 may determine to end the generation of the gripping plan.

When it is determined that the generation of the gripping plan is not ended (S25, NO), the processor 11 returns to S11.

When it is determined that the generation of the gripping plan is ended (S25, YES), the processor 11 ends the operation.

An operation example of transmitting the gripping plan (S2) will now be described.

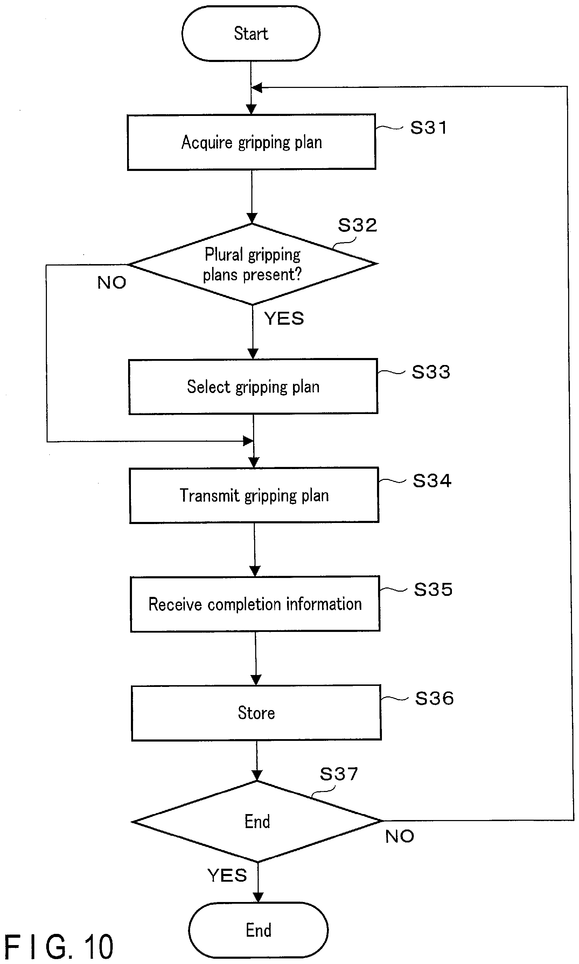

FIG. 10 is a flowchart for explaining an operation example of transmitting the gripping plan (S2).

The processor 11 acquires the generated gripping plan (S31). When the gripping plan is acquired, the processor 11 determines whether there are a plurality of gripping plans (S32). When it is determined that there are a plurality of gripping plans (S32, YES), the processor 11 selects a gripping plan from the plurality of gripping plans (S33).

In the case where it is determined that there is one gripping plan (S32, NO) or in the case where the gripping plan is selected (S33), the processor 11 transmits the selected gripping plan (S32, in the case of NO, the acquired gripping plan) to the robot controller 111 through the robot interface 18 (S34).

When the gripping plan is transmitted, the processor 11 receives completion information through the robot interface 18 (S35). When the completion information is received, the processor 11 stores the transmitted gripping plan and the received completion information in association with each other in the storage device 109 through the storage device interface 17 (S36).

When the transmitted gripping plan and the received completion information are stored in the storage device 109 in association with each other, the processor 11 determines whether to end the transmission of the gripping plan (S37). For example, the processor 11 determines whether an input of an operation to end the transmission of the gripping plan is received. Furthermore, in the case of completing pickup of each article of the article group 101, the processor 11 may determine to end the transmission of the gripping plan.

When it is determined that the transmission of the gripping plan should not end (S37, NO), the processor 11 returns to S31.

When it is determined that the transmission of the gripping plan should end (S37, YES), the processor 11 ends the operation.

It should be noted that the processor 11 may transmit a plurality of gripping plans to the robot controller 111.

Furthermore, in the case where the picking robot 10 picks up an article in S1, the processor 11 may return to S11. In this case, in a case where S26 is NO, the processor 11 may return to S16.

Furthermore, in the case of returning to S11, the processor 11 may use a previous recognition result of the article region. For example, the processor 11 may use the previous article region in a region where there is no difference between the immediately preceding captured image and the current captured image.

Furthermore, the processor 11 may not have to recognize the article region. The processor 11 may display a 3D image of the article group 101 and receive the input of the position and the angle of the grip portion model 201.

Furthermore, the processor 11 may receive an input of the position and the angle of the grip portion model 201 in the case where the article region cannot be recognized.

The control device configured in the manner described above displays a 3D image of the article group on the screen based on the captured image of the article group and the distance information of the article group. The control device receives an input of a position and an angle of a viewpoint for viewing the article group from an operator, and displays the 3D image of the article group according to the input. The control device also receives an input of a position and an angle of a grip portion for gripping an article of the article group on a screen displaying the 3D image of the article group. The control device generates a gripping plan indicating a gripping position and a gripping angle at which the grip portion grips the article based on the input position and angle. As a result, the control device can generate the gripping plan based on the position and the angle of the grip portion input by the operator while viewing the screen. Therefore, the control device can generate an appropriate gripping plan.

While certain embodiments have been described, these embodiments have been presented by way of example only, and are not intended to limit the scope of the inventions. Indeed, the novel embodiments described herein may be worked in a variety of other forms. Furthermore, various omissions, substitutions, and changes in the form of the embodiments may be made without departing from the spirit of the inventions. These embodiments and modifications thereof are included in the scope and spirit of the invention, and are also included in the invention described in the claims and the equivalent scope thereof.

## Claims

1. A control device comprising:
a first interface configured to acquire a captured image of an article;
a second interface configured to transmit and receive data to and from an input/output device;
a processor configured to
cause the input/output device to display an article image based on the captured image,
receive an input of a position and an angle of a grip portion model of a grip portion that grips the article from the input/output device through the second interface,
display the grip portion model at the position and the angle on the article image, and
generate, based on the position and the angle, a gripping plan indicating a gripping position and a gripping angle at which the grip portion grips the article; and
a third interface configured to transmit the gripping plan to a control unit of a gripping device including the grip portion.

2. The control device according to claim 1, wherein the processor displays the grip portion model in a semitransparent manner.

3. The control device according to claim 1 or 2, wherein
the first interface further acquires distance information obtained by measuring a distance to the article, and
the article image is a three-dimensional image based on the distance information.

4. The control device according to claim 3, wherein the processor
receives an operation of changing a viewpoint at which the three-dimensional image is displayed through the input/output device, and
updates display of the three-dimensional image according to the operation.

5. The control device according to claim 3 or 4, wherein the processor
recognizes an article region in which the article is displayed based on the captured image and the distance information, and
displays the article region on the three-dimensional image.

6. The control device according to one of claims 1 to 5, wherein the processor displays a suction pad model of a suction pad included in the grip portion.

7. The control device according to claim 6, wherein the processor displays information indicating the suction pad connected to a common valve among valves controlling pressure of the suction pad.

8. The control device according to claim 6 or 7, wherein the processor displays a distance between the article and the suction pad.

9. The control device according to one of claims 6 to 8, wherein the processor corrects the position and the angle in a manner that a distance between the suction pad model and the article becomes a predetermined distance, and generates the gripping plan indicating the position and the angle corrected as the gripping position and the gripping angle.

10. The control device according to one of claims 1 to 9, wherein the processor selects one gripping plan from a plurality of the gripping plans, and transmits the selected gripping plan to the control unit.

11. The control device according to one of claims 1 to 10 comprising a fourth interface configured to transmit and receive data to and from a storage device, wherein the processor
receives completion information indicating whether or not the article has been successfully gripped through the third interface, and
stores the article image, the gripping plan, and the completion information in the storage device through the fourth interface.

12. A program to be executed by a processor, the program causing the processor to:
acquire a captured image of an article;
display an article image based on the captured image on an input/output device;
receive an input of a position and an angle of a grip portion model of a grip portion for gripping the article from the input/output device;
display the grip portion model at the position and the angle on the article image;
generate, based on the position and the angle, a gripping plan indicating a gripping position and a gripping angle at which the grip portion grips the article; and
transmit the gripping plan to a control unit of a gripping device including the grip portion.
